# EUROPEAN PATENT APPLICATION

(11) **EP 4 510 374 A1**
(43) Date of publication of application: **19.02.2025**
(21) Application number: 22965405.8
(22) Date of filing: 14.11.2022
(51) Int. Cl.: H01M 50/593, H01G 11/78

(54) **BATTERY CELL, BATTERY, ELECTRIC DEVICE, AND BATTERY CELL MANUFACTURING METHOD**

(71) Applicant: Contemporary Amperex Technology Co., Limited, Fujian 352100 (CN)
(72) Inventor: CHAI, Zhisheng, Ningde City, Fujian 352100 (CN)
(74) Representative: Ran, Handong
(86) International application number: PCT/CN2022/131695
(87) International publication number: WO 2024/103212

(57) **Abstract**

The present application provides a battery cell, a battery, an electric device, and a battery cell manufacturing method. The battery cell comprises a casing, an electrode assembly, an end cover and a current collecting component. The casing is provided with an opening. The electrode assembly is accommodated in the casing, and the electrode assembly is provided with a tab. The end cover covers the opening. The current collecting component is accommodated in the casing and connected to the tab, the current collecting member is connected to the end cover by means of welding and a first welding portion is formed, and the first welding portion does not pass through the end cover in the axial direction of the electrode assembly.

## Description

### TECHNICAL FIELD

The present application relates to the technical field of batteries, and more particularly to a battery cell, a battery, an electrical apparatus, and a method for manufacturing a battery cell.

### BACKGROUND

With energy saving and emission reduction being the key to the sustainable development of the automobile industry, electric vehicles have become an important part of the sustainable development of automotive industry due to their advantages of energy saving and environmental protection. For the electric vehicles, battery technology is an important factor related to their development.

Battery cells usually use a current collecting member to draw out current and transmit it to an electrical device. Sealing problems are present in the connection between the current collecting member and the end cover, which makes the electrolyte in the battery cell prone to leakage.

### SUMMARY OF THE INVENTION

The present application aims to solve at least one of the technical problems existing in the prior art. To this end, it is an object of the present application to propose a battery cell, a battery, an electrical apparatus and a method for manufacturing a battery cell to solve the problem of electrolyte leakage in the battery cell.

An embodiment of a first aspect of the present application provides a battery cell, including: a case, an electrode assembly, an end cover, and a current collecting member. The case has an opening; the electrode assembly is accommodated in the case, and the electrode assembly has tabs; and the end cover covers the opening. The current collecting member is accommodated in the case and connected to the tabs. The current collecting member is welded and connected to the end cover to form a first welded portion, and the first welded portion does not run through the end cover along the axial direction of the electrode assembly.

In the technical solution of the embodiment of the present application, since the first welded portion cannot penetrate the end cover, even if a crack occurs at the welding point between the current collecting member and the end cover, the electrolyte inside the battery cell cannot overflow out of the battery cell via the crack, thereby effectively reducing the risk of electrolyte leakage from the battery cell.

In some embodiments, the first welded portion is configured to be formed by emitting laser in a direction intersecting with the central axis of the electrode assembly to melt the current collecting member and the end cover. This embodiment is advantageous in that laser does not penetrate the end cover when forming the first welded portion through laser welding while the emitting direction of the laser is controlled to avoid damage to the electrode assembly.

In some embodiments, the current collecting member includes: a first current collecting portion and a second current collecting portion. The first current collecting portion is electrically connected to the tabs, the second current collecting portion is located on an outer side of the current collecting portion and connected to the first current collecting portion, and the second current collecting portion is welded and connected to the end cover to form the first welded portion. This embodiment can effectively separate the connection point between the current collecting member and the tabs and the welding point between the current collecting member and the end cover.

In some embodiments, the first current collecting portion has a flat-plate shaped structure, and the second current collecting portion protrudes from the first current collecting portion in a direction facing away from the electrode assembly. In this embodiment, the current collecting member has a non-flat-plate shaped structure, and the second current collecting portion protrudes from the first current collecting portion. In this way, the second current collecting portion can be easily welded and connected to the end cover.

In some embodiments, a first abutting surface is formed on the end cover, the first abutting surface is opposite to the inner side face of the case, and the second current collecting portion abuts against and is welded and connected to the first abutting surface to form the first welded portion. In this embodiment, the first abutting surface provides positioning to facilitate accurate finding of the welding position between the end cover and the current collecting member.

In some embodiments, along the axial direction of the electrode assembly, a minimum distance between the first welded portion and the electrode assembly is a first distance h0, and a penetration depth a of the first welded portion and the first distance h0 satisfy the condition: a/h0≤ 0.5.

Such a design h0≥2a enables the minimum distance h0 between the first welded portion and the electrode assembly to be much larger than the penetration depth a of the first welded portion. In this way, during assembly of the battery cell, first the first current collecting portion of the current collecting member is welded and connected to the tabs, and then the laser is emitted to the second current collecting member and the end cover to weld and connect the second current collecting member to the end cover, at the time of which not only is the laser prevented from being projected onto the electrode assembly and causing damage to the electrode assembly, but the high temperature of the laser does not burn the electrode assembly.

In some embodiments, both the first current collecting portion and the second current collecting portion have a flat-plate shaped structure, so that the current collecting member has a flat-plate shaped structure. In this embodiment, the current collecting member has a flat-plate shaped structure, and the second current collecting portion of the current collecting member does not occupy additional space in the case along the axial direction of the electrode assembly. In this way, without changing the overall height of the battery cell, a larger number of electrode plates can be accommodated inside the battery cell, which is beneficial to increasing the active material capacity of the battery cell, thereby increasing the energy density of the battery cell.

**In** some embodiments, the case has an open-end face surrounding the opening, the end cover includes a connecting portion and a main body portion connected to each other, the connecting portion is connected to the open-end face, the connecting portion surrounds an outer edge of the main body portion, the main body portion includes a protrusion toward the electrode assembly, and the protrusion is welded and connected to the second current collecting portion to form the first welded portion.

**In** this embodiment, it is easy to find the welding position between the flat-plate shaped current collecting member and the main body portion of the end cover, resulting in reduced difficulty in laser positioning and high assembly efficiency.

In some embodiments, the current collecting member is provided with a partition hole, the partition hole separates the current collecting member into the first current collecting portion and the second current collecting portion; and the partition hole is configured to enable the current collecting member to have a first state and a second state, where in the first state, the current collecting member has a flat-plate shaped structure, and when the current collecting member is in the second state, the second current collecting portion protrudes from the first current collecting portion in a direction facing away from the electrode assembly.

Through such an arrangement, it can be ensured that during assembly of the battery cell, by pulling up the second current collecting portion, the current collecting member is welded to the end cover in the second state, so as to prevent the laser from being projected onto the electrode assembly during welding and damaging the electrode assembly, and it can also be ensured that in the assembled battery cell, the second current collecting portion of the current collecting member does not occupy additional space in the case in the axial direction of the electrode assembly, thereby increasing the energy density of the battery cell.

In some embodiments, the partition hole is configured such that the second current collecting portion is an integral piece and the second current collecting portion has an annular structure. With this design, since the second current collecting portion has an integral structure, during assembly of the battery cell, it is needed to apply only one acting force to the integral second current collector to switch the current collecting member from the first state to the second state.

In some embodiments, multiple partition holes are formed on the current collecting member, and the multiple partition holes are arranged at an interval around the central axis of the electrode assembly.

In some embodiments, the partition holes include a first through hole, a second through hole, and a third through hole that are sequentially in communication; the first through hole and the third through hole are both arc-shaped, and the arc-shaped first through hole and third through hole both have a center on the central axis of the electrode assembly, the third through hole is located on the side of the first through hole away from the central axis of the electrode assembly; and the second through hole extends in a direction perpendicular to the central axis of the electrode assembly.

In this embodiment, the partition hole has both a part extending along the circumferential direction of the current collecting member and a part extending along the direction perpendicular to the central axis of the electrode assembly, making it easier for the second current collecting portion as an integral structure to be bent under an acting force and protrude from the first current collecting portion.

In some embodiments, multiple partition holes are formed on the current collecting member. The multiple partition holes are arranged at an interval around the central axis of the electrode assembly, and one end of each partition hole is close to the central axis of the electrode assembly and the other end extends to the outer side face of the second current collecting portion.

In this embodiment, the partition holes can interrupt the second current collecting portion, and the multiple sub-current collectors of the second current collecting portion are separated from each other. In this way, during assembly of the battery cell, by applying an acting force to each sub-current collector individually, each sub-current collector is deformed by force and protrudes in the direction facing away from the electrode assembly. Since two adjacent sub-current collectors will not affect each other, after operations are applied to all sub-current collectors, the current collecting member can reach the second state without adjusting the second current collecting portion.

In some embodiments, the partition holes include a first open hole and a second open hole in communication with each other. The first open hole is located on the side of the second open hole away from the central axis of the electrode assembly; the first open hole extends to the outer side face of the second current collecting portion along the direction perpendicular to the central axis of the electrode assembly, the second open hole is arc-shaped, and the center of the arc-shaped second open hole is located on the central axis of the electrode assembly.

In this embodiment, each sub-current collector has a cantilever plate. In this way, during assembly of the battery cell, by applying an acting force to the cantilever plate, the cantilever plate can be easily pulled to protrude from the first current collecting portion, and when the current collecting member is in the second state, the cantilever plate can still be maintained as a flat plate to ensure that the laser can be smoothly projected onto the cantilever plate and the end cover in the direction perpendicular to the central axis of the electrode assembly, so that the second current collecting portion and the end cover are welded to each other.

In some embodiments, the partition holes further include a third open hole and a fourth open hole that are in communication with the second open hole, and the third open hole and the fourth open hole are both located on the side of the second open hole close to the central axis of the electrode assembly and extend in the direction perpendicular to the central axis of the electrode assembly.

In some embodiments, the case has an open-end face surrounding the opening, and the end cover is welded and connected to the open-end face to form a second welded portion. In this embodiment, the end cover and the case are reliably connected to each other by welding, which is beneficial to improving the sealing of the case by the end cover, and the case can also serve as an electrode lead-out pole.

In some embodiments, the second welded portion is configured to be formed by emitting laser in the direction perpendicular to the central axis of the electrode assembly to melt the end cover and the case. In this way, the end cover will not be penetrated by the laser, and the second welded portion may not run through the end cover. As such, when the thermal expansion coefficients of the material forming the end cover and the material forming the case are greatly different, even if a crack occurs in the second welded portion, the electrolyte inside the battery cell can be prevented from overflowing out of the battery cell via the crack, thereby effectively reducing the risk of electrolyte leakage from the battery cell.

In some embodiments, along the axial direction of the electrode assembly, the minimum distance between the second welded portion and the electrode assembly is a second distance h1, and the penetration depth b of the second welded portion formed on the end cover and the second distance h1 satisfy the condition: b/h1≤0.5.

Such a designh1≥ 2b enables the minimum distance h1 between the second welded portion and the electrode assembly to be much larger than the penetration depth b of the second welded portion. In this way, during assembly of the battery cell, when the laser is emitted to weld and connect the end cover to the case, not only is the laser prevented from being projected onto the electrode assembly and causing damage to the electrode assembly, but also the high temperature of the laser will not burn the electrode assembly.

In some embodiments, along the axial direction of the electrode assembly, the first welded portion is located between the second welded portion and the electrode assembly. In this embodiment, there is a distance between the first welded portion and the second welded portion, and the two are not likely to interfere with each other, so that when the laser is emitted to the case and the end cover to form the second welded portion, the laser will not be projected onto the first welded portion, thereby preventing the first welded portion from being affected by the second welded portion.

In some embodiments, the end cover includes a main body portion and a connecting portion surrounding the outer side of the main body portion. The connecting portion is welded and connected to the open-end face to form the second welded portion. A second abutting surface is formed on the main body portion. The second abutting surface abuts against the inner side face of the case. With this arrangement, the abutting between the second abutting surface and the case can provide the function of positioning.

In some embodiments, the main body portion is in interference fit with the cavity in the case. As can be known from this, after the end cover overs the case, there is no gap between the main body portion of the end cover and the inner side face of the case, so that the end cover is tightly connected to the case with high reliability of connection between the two.

In some embodiments, the tabs are electrically connected to the case through the current collecting member and the end cover in sequence. By arranging the tabs to be electrically connected to the case through the current collecting member and the end cover in sequence, the case can serve as an electrode lead-out pole.

An embodiment of a second aspect of the present application provides a battery including the battery cell provided by the embodiment of the first aspect of the present application.

An embodiment of a third aspect of the present application provides an electrical apparatus including the battery provided by the embodiment of the second aspect of the present application, the battery being used for providing electric energy.

An embodiment of a fourth aspect of the present application provides a method for manufacturing a battery cell. The method for manufacturing a battery cell includes: providing a case with an opening; providing an electrode assembly with tabs; providing an end cover; providing a current collecting member; and electrical connection: connecting the current collecting member to the tabs; emitting laser to melt the current collecting member and the end cover to weld and connect the current collecting member to the end cover to form a first welded portion, the first welded portion not running through the end cover along an axial direction of the electrode assembly; and accommodating the electrode assembly and the current collecting member in the case, and covering the end cover over the opening.

In some embodiments, the current collecting member includes a first current collecting portion and a second current collecting portion, both the first current collecting portion and the second current collecting portion have a flat-plate shaped structure, so that the current collecting member has a flat-plate shaped structure, and the current collecting member is provided with a partition hole, the partition hole separates the current collecting member into the first current collecting portion and the second current collecting portion; and the partition hole is configured such that the current collecting member has a first state and a second state, where in the first state, the current collecting member has a flat-plate shaped structure, and when the current collecting member is in the second state, the second current collecting portion protrudes from the first current collecting portion in a direction facing away from the electrode assembly. The step of electrical connection includes: connecting the first current collecting portion to the tabs; pulling the second current collecting portion of the current collecting member toward the side facing away from the electrode assembly, so that the current collecting member switches from the first state to the second state; emitting laser in a direction intersecting with the central axis of the electrode assembly to melt the second current collecting portion and the end cover to weld and connect the second current collecting portion to the end cover to form a first welded portion, the first welded portion not passing through the end cover along the axial direction of the electrode assembly; and moving the end cover in a direction close to the electrode assembly until the current collecting member switches from the second state to the first state.

In some embodiments, after covering the end cover on opening, the method for manufacturing a battery cell further includes: welding and connecting the end cover to the open-end face of the case to form a second welded portion.

The above description is only an overview of the technical solutions of the present application. In order to enable clearer understanding of the technical means of the present application to implement the same according to this specification, and in order to enable the above and other objectives, features and advantages of the present application to be more obvious and understandable, detailed description of the present application is presented below.

### DESCRIPTION OF DRAWINGS

In the drawings, unless otherwise specified, the same reference numbers refer to the same or similar parts or elements throughout the several figures. These drawings are not necessarily drawn to scale. It should be understood that these drawings depict only some embodiments disclosed according to the present application, and should not be regarded as a limitation of the scope of the present application.
Fig. 1 is a schematic partial sectional view of a battery cell in the related art;
Fig. 2 is a schematic structural view of a vehicle provided in some embodiments of the present application;
Fig. 3 is an exploded view of a battery provided in some embodiments of the present application;
Fig. 4 is a schematic disassembled view of a battery cell provided in some embodiments of the present application;
Fig. 5 is a schematic partial sectional view of the battery cell shown in Fig. 4;
Fig. 6 is a partial enlarged view at Part A in Fig. 5;
Fig. 7 is a schematic partial sectional view of a battery cell provided in some other embodiments of the present application;
Fig. 8 is a schematic sectional view of a battery cell provided in yet some other embodiments of the present application;
Fig. 9 is a schematic structural view of a first current collecting member in a battery cell provided in yet some other embodiments of the present application;
Fig. 10 is a front view of a second current collecting member in a battery cell provided in yet some other embodiments of the present application;
Fig. 11 is a front view of a third current collecting member in a battery cell provided in yet some other embodiments of the present application;
Fig. 12 is a front view of a fourth current collecting member in a battery cell provided in yet some other embodiments of the present application;
Fig. 13 is a schematic structural view of a fifth current collecting member in a battery cell provided in yet some other embodiments of the present application;
Fig. 14 is a schematic structural view of a sixth current collecting member in a battery cell provided in yet some other embodiments of the present application; and
Fig. 15 is a schematic flow chart of a method for manufacturing a battery cell provided in some embodiments of the present application.

### Description of reference numerals:

1000-vehicle;
100-battery;
10-box body; 11-first part; 12-second part;
20-battery cell;
21-case;
22-electrode assembly;
23-current collecting member; 231-first current collecting portion; 232-second current collecting portion; 2321-sub-current collector; 2321a-first part; 2321b-second part; 233-partition hole; 2331-first through hole; 2332-second through hole; 2333-third through hole; 2334-first open hole; 2335-second open hole; 2336-third open hole; 2337-fourth open hole;
24-end cover; 241-connecting portion; 242-main body portion; 243-first abutting surface; 244-second abutting surface; 245-cover plate; 246-abutting portion;
25-first welded portion;
26-second welded portion;
200-controller;
300-motor.

### DETAILED DESCRIPTION

Embodiments of the technical solutions of the present application will be described in detail below with reference to the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application. The terms used herein are intended only for the purpose of describing specific embodiments and are not intended to limit the present application. The terms "including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the quantity, particular order, or primary and secondary relation of the technical features indicated. In the description of the embodiments of the present application, the meaning of "a plurality of" is two or more, unless otherwise explicitly and specifically defined.

Reference herein to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. In addition, the character "/" herein generally means that the associated objects before and after it are in an "or" relationship.

In the description of the embodiments of the present application, the term "multiple" refers to two or more (including two), and similarly, "multiple groups" refers to two or more (including two) groups, and "multiple sheets" refers to two or more (including two) sheets.

In the description of the embodiments of the present application, the orientation or position relationship indicated by the technical terms "center," "longitudinal," "transverse," "length," "width," "thickness," "upper," "lower," "front," "back," "left," "right," "vertical," "horizontal," "top," "bottom," "inner," "outer," "clockwise," "counterclockwise," "axial," "radial," "circumferential," and the like are based on the orientation or position relationship shown in the drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In the description of the embodiments of the present application, unless otherwise expressly specified and defined, the technical terms "mount," "join," "connect," "fix," and the like should be understood in a broad sense, such as, a fixed connection, a detachable connection, or an integral connection; a mechanical connection, or an electrical connection; a direct connection, an indirect connection through an intermediate medium, internal communication between two elements, or interaction between two elements. Those of ordinary skill in the art can understand the specific meanings of the above terms in the embodiments of the present application according to specific situations.

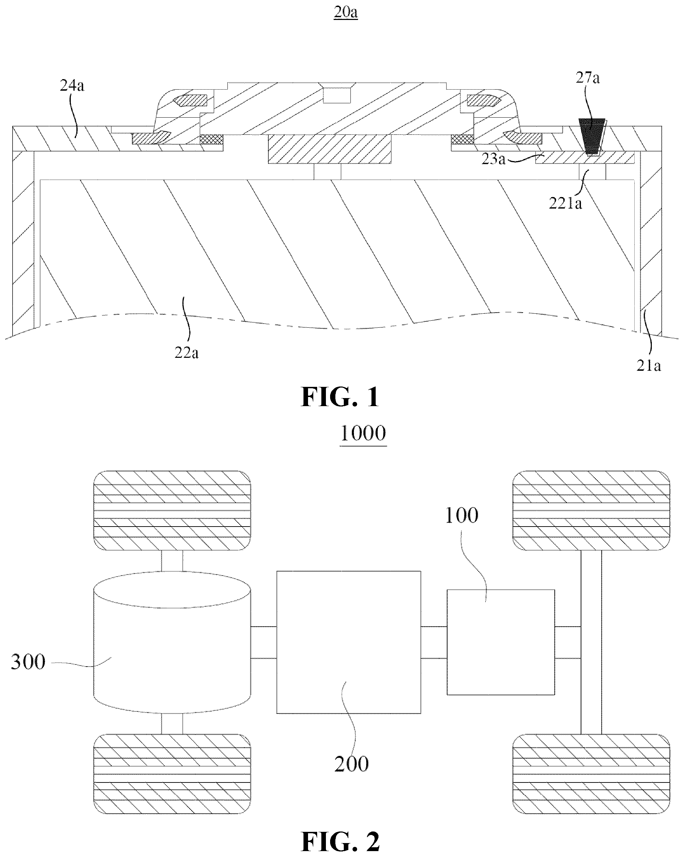

Power batteries have become a new trend in energy development due to their high energy density, green environmental protection and other characteristics. Refer to Fig. 1, which is a schematic partial sectional view of a battery cell in the related art. At present, a battery cell 20a typically includes a case 21a, an electrode assembly 22a, a current collecting member 23a and an end cover 24a. The electrode assembly 22a is formed by an electrode plate and a separator. A bare foil area is formed on the current collector of the electrode plate. The bare foil area is flattened to form a tab 221a. Among them, the tab 221a is connected to the current collecting member 23a, and the current collecting member 23a is connected to the end cover 24a. In this way, the tab 221a, the current collecting member 23a, the end cover 24a, and the case 21a are connected in sequence to form a conductive path for outputting electrical energy. The current collecting member 23a is typically made of copper, and the end cover 24a is typically made of steel, so that while the current collecting member 23a and the end cover 24a are electrically conductive, the end cover 24a can also have high strength.

In some embodiments, the assembly process of the above-mentioned battery cell 20a can be substantially as follows: welding and connecting the tab 221a of the electrode assembly 22a to the current collecting member 23a, placing the electrode assembly 22a connected with the current collecting member 23a in the case 21a, covering the end cover 24a on the case 21a and welding and connecting the end cover 24a to the case 21a, and then welding and connecting the end cover 24a to the current collecting member 23a by laser outside welding.

However, the inventor found that the battery cell 20a has the following problems:

First, when the end cover 24a is welded and connected to the current collecting member 23a by laser outside welding, the current collecting member 23a is located in the closed space enclosed by the case 21a and the end cover 24a, making it difficult to accurately find the welding position of the current collecting member 23a.

Second, since the current collecting member 23a is made of copper and the end cover 24a is made of steel, the thermal expansion and thermal conductivity of copper and steel are greatly different, and the expansion coefficient of copper is about 40% higher than that of iron, a large stress is produced at the welding point between the end cover 24a and the current collecting member 23a, and cracks occur at the welding seam 27a formed at the welding point between the two. When welding is performed by laser outside welding, the end cover 24a will be penetrated by the laser, that is, the welding seam 27a will penetrate the end cover 24a. As such, if a crack occurs at the welding seam 27a, then the sealing of the case 21a by the end cover 24a is not tight, so that the electrolyte in the case 21a tends to overflow out of the battery cell 20a via the crack in the welding seam 27a, resulting in electrolyte leakage.

In view of this technical problem, the inventor has researched and designed the welding of the current collecting member to the end cover, and the laser is emitted to the current collecting member and the end cover in a direction perpendicular to the central axis of the electrode assembly to form a first welded portion, so that the first welded portion does not run through the end cover along the axial direction of the electrode assembly.

The battery cell disclosed in embodiments of the present application can be used, without limitation, in electrical apparatuses such as a vehicle, a ship, or an aircraft. The power supply system of the electrical apparatus can be formed by the battery cell, battery, and the like disclosed in the present application, which is beneficial to solving the problem of electrolyte leakage in the battery cell.

Embodiments of the present application provide an electrical apparatus that uses a battery as a power supply, and the electrical apparatus may be, but is not limited to, a mobile phone, a tablet, a laptop, an electric toy, an electric tool, an electric bicycle, an electric vehicle, a ship, a spacecraft, and the like. The electric toy may include a fixed or mobile electric toy, such as a game console, an electric car toy, an electric ship toy, an electric airplane toy, and the like. The spacecraft may include an airplane, a rocket, a space shuttle, a spaceship, and the like.

For the convenience of description, the following embodiments are illustrated with an example in which the electrical apparatus according to an embodiment of the present application is a vehicle.

Refer to Fig. 2, which is a schematic structural view of a vehicle 1000 provided by some embodiments of the present application. The vehicle 1000 may be a fuel vehicle, a gas vehicle, or a new energy vehicle, and the new energy vehicle may be an all-electric vehicle, a hybrid electric vehicle, an extended range electric vehicle, or the like. The vehicle 1000 is internally provided with a battery 100, and the battery 100 may be arranged at the bottom or head or tail of the vehicle 1000. The battery 100 may be used to supply power to the vehicle 1000. For example, the battery 100 may be used as an operating power supply of the vehicle 1000. The vehicle 1000 may further include a controller 200 and a motor 300. The controller 200 is used to control the battery 100 to power the motor 300, for example, to meet working power demands during starting, navigation and driving of the vehicle 1000.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

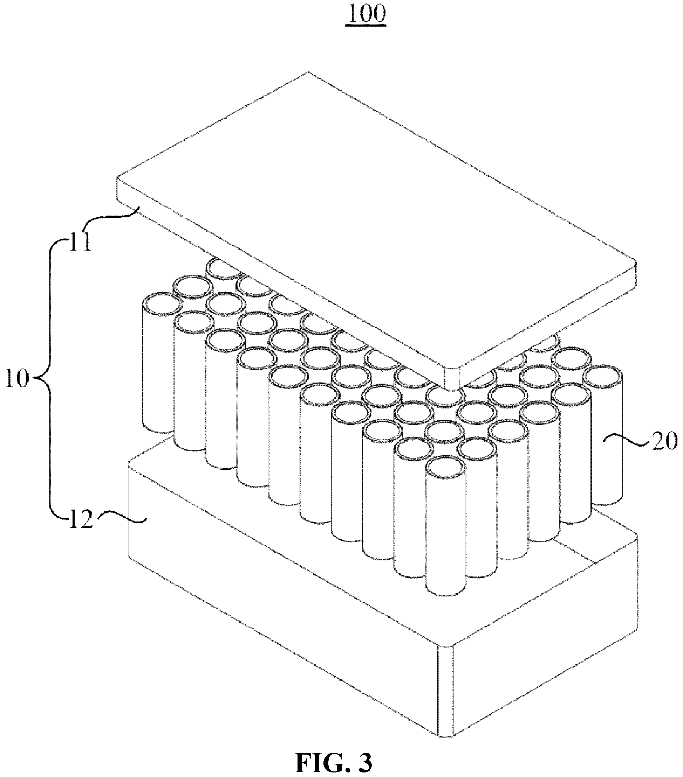

Refer to Fig. 3, which is an exploded view of a battery 100 provided by some embodiments of the present application. The battery 100 includes a box body 10 and a battery cell 20, and the battery cell 20 is accommodated in the box body 10. where the box body 10 is used to provide an accommodating space for the battery cell 20, and the box body 10 can be of various structures. In some embodiments, the box body 10 may include a first part 11 and a second part 12. The first part 11 and the second part 12 are covered by each other, and together define the accommodating space for accommodating the battery cell 20. The second part 12 may be of a hollow structure with one end open, the first part 11 may be of a plate-like structure, and the first part 11 covers the opening side of the second part 12, so that the first part 11 and the second part 12 together define the accommodating space. Each of the first part 11 and the second part 12 may also be of a hollow structure with one side open, and the opening side of the first part 11 covers the opening side of the second part 12. Of course, the box body 10 formed by the first part 11 and the second part 12 may be in various shapes, such as a cylinder or a cuboid.

In the battery 100, there may be a plurality of battery cells 20, and the plurality of battery cells 20 may be connected in series or parallel or in a parallel-series connection, and the parallel-series connection means that the plurality of battery cells 20 are connected in both series and parallel. The plurality of battery cells 20 may be directly connected in series, or in parallel or in the parallel-series connection, and then are assembled as a whole to be accommodated in the box body 10; and of course, the battery 100 may also be formed in the manner that the plurality of battery cells 20 are connected in series, or in parallel or in the parallel-series connection to form battery modules, and the plurality of battery modules are then connected in series, or in parallel or in the parallel-series connection, and is accommodated in the box body 10. The battery 100 may further include other structures. For example, the battery 100 may further include a convergence component for electrically connecting the plurality of battery cells 20.

Each battery cell 20 may be a secondary battery or a primary battery; and may also be a lithium-sulfur battery, a sodium-ion battery or a magnesium-ion battery, but is not limited thereto. The battery cell 20 may be in the shape of a cylinder, a flat body, a cuboid or the like.

The specific structure of the battery cell 20 will be described in detail below with reference to the accompanying drawings.

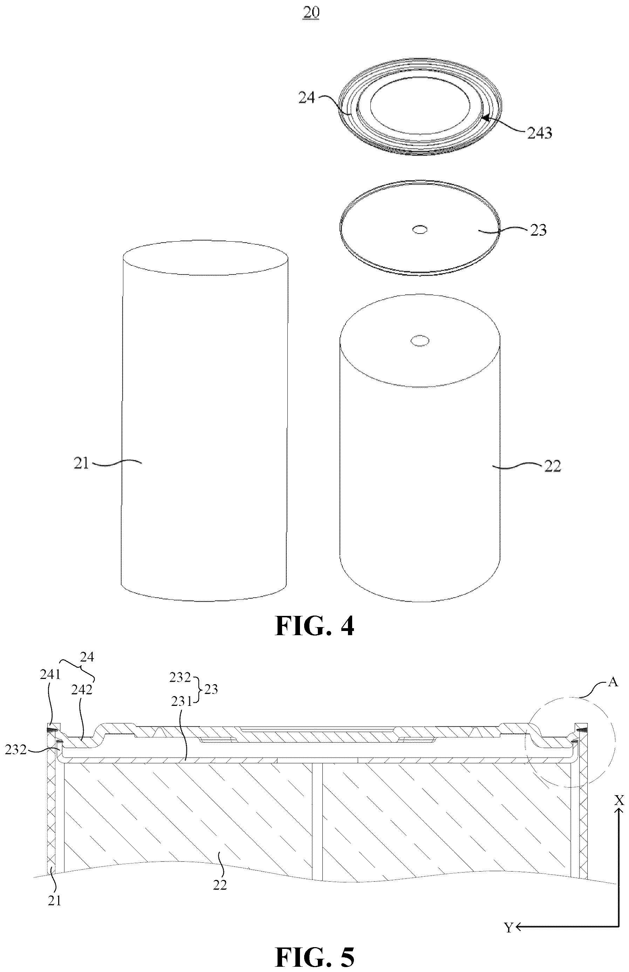

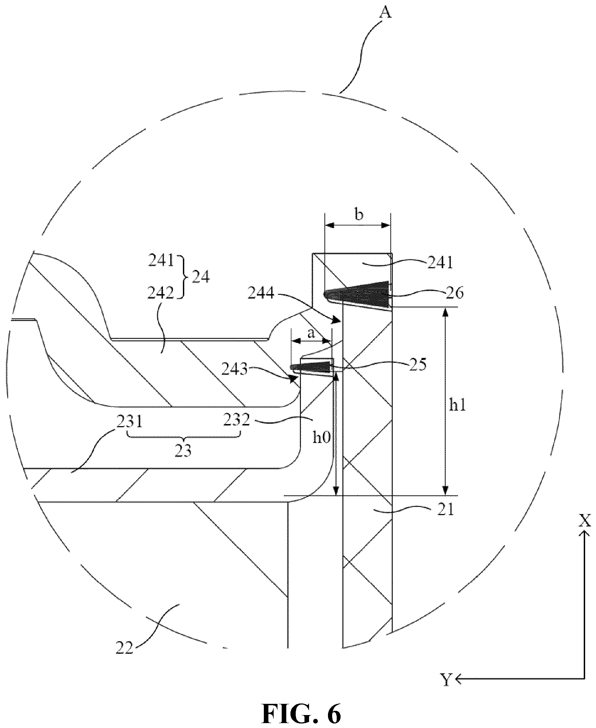

Fig. 4 is a schematic disassembled view of a battery cell provided in some embodiments of the present application, Fig. 5 is a schematic partial sectional view of the battery cell shown in Fig. 4, and Fig. 6 is a partial enlarged view at part A shown in Fig. 5. According to some embodiments of the present application, with reference to Figs. 4 to 6, the battery cell 20 refers to the smallest unit that forms the battery 100. The battery cell 20 includes a case 21, an electrode assembly 22, an end cover 24 and a current collecting member 23. The case 21 has an opening, the electrode assembly 22 is accommodated in the case 21, the electrode assembly 22 has a tab, the end cover 24 covers the opening, the current collecting member 23 is accommodated in the case 21 and connected to the tab, the current collecting member 23 is welded and connected to the end cover 24 to form a first welded portion 25, and the first welded portion 25 does not run though the end cover 24 along the axial direction of the electrode assembly 22.

The case 21 is a hollow structure for accommodating the electrode assembly 22. The case 21 also has an open-end face surrounding the opening. The case 21 can be filled with electrolyte. The shape and size of the case 21 are adapted to the shape and size of the electrode assembly 22. For a cylindrical battery cell 20, the electrode assembly 22 and the case 21 may both be in a cylindrical shape. For a squared battery cell 20, the electrode assembly 22 and the case 21 may both be in a squared shape. The case 21 may be made of various materials, such as copper, iron, aluminum, stainless steel, and an aluminum alloy, which is not particularly limited in embodiments of the present application.

The end cover 24 is a component that covers the opening of the case 21 to isolate the internal environment of the battery cell 20 from the external environment, and part of the end cover 24 overlaps the open-end face of the case 21. Without limitation, the shape of the end cover 24 may be adapted to the shape of the case 21 so as to be fitted with the case 21. The end cover 24 may be made of a material (e.g., copper, iron, aluminum, stainless steel, aluminum alloy, and the like) with a certain hardness and strength. As such, the end cover 24 is not easily deformed when subjected to extrusion and collision, such that the battery cell 20 can have higher structural strength, and the safety performance can also be improved. Functional components such as an electrode terminal may be provided on the end cover 24 to output or input electrical energy for the battery cell 20.

The electrode assembly 22 is a component in the battery cell 20 where electrochemical reactions occur. The electrode assembly 22 may include a main body portion and a tab. The tab extends from the main body portion such that the tab protrudes from the end of the main body portion. The electrode assembly 22 may include a positive electrode plate, a negative electrode plate, and a separator. The electrode assembly 22 may be a wound structure formed by winding the positive electrode plate, the negative electrode plate, and the separator. The electrode assembly 22 may also be a laminated structure formed by stacking the positive electrode plate, the negative electrode plate, and the separator. The positive electrode plate includes a positive electrode current collector and a positive electrode active material layer coated on opposite sides of the positive electrode current collector. The negative electrode plate includes a negative electrode current collector and a negative electrode active material layer coated on opposite sides of the negative electrode current collector. The main body portion is the part of the electrode assembly 22 corresponding to the area of the electrode plate coated with the active material layer, and the tab is the part of the electrode plate that is not coated with the active material layer.

The tab may include a first tab and a second tab. The first tab is protruded and connected to the first electrode plate, and the second tab is protruded and connected to the second electrode plate. Among them, the first tab can be connected to the current collecting member 23, then the first tab is electrically connected to the end cover 24 through the current collecting member 23, the second tab can be electrically connected to the electrode terminal, and the electrode terminal and the case 21 are insulated from each other. In this way, the end cover 24 and the electrode terminal can respectively serve as electrode lead-out poles with different polarities on the battery cell 20 for inputting or outputting electrical energy.

The first tab and the second tab may be located at the same end of the electrode assembly 22, or may be located at different ends of the electrode assembly 22. One of the first tab and the second tab is a positive tab, and the other of them is a negative tab. If the first tab is the positive tab and the second tab is the negative tab, then the end cover 24 is the positive electrode lead-out pole and the electrode terminal is the negative electrode lead-out pole; and if the first tab is the negative tab and the second tab is the positive tab, then the end cover 24 is the negative electrode lead-out pole and the electrode terminal is the positive electrode lead-out pole.

In this way, an exemplary assembly process of the battery cell 20 of this embodiment may be as follows. The current collecting member 23 is welded and connected to the tab of the electrode assembly 22. The end cover 24 is moved to the side of the current collecting member 23 facing away from the electrode assembly 22. The laser is emitted along the direction Y to melt the current collecting member 23 and the end cover 24 to weld and connect the current collecting member 23 to the end cover 24 to form the first welded portion 25. Then the electrode assembly 22, the current collecting member 23 and the end cover 24 connected to each other are moved so that the connected electrode assembly 22 and current collecting member 23 are accommodated in the case 21. Meanwhile, the end cover 24 covers the opening to seal the case 21.

In summary, for the battery cell 20 provided in this embodiment, the laser is emitted onto the current collecting member 23 and the end cover 24, so that the current collecting member 23 is welded and connected to the end cover 24 to form the first welded portion 25, and the first welded portion 25 does not run through the end cover 24 in the axial direction X of the electrode assembly 22. In this way, even if a crack occurs at the welding point between the current collecting member 23 and the end cover 24, the electrolyte inside the battery cell 20 cannot overflow out of the battery cell 20 via the crack, thereby effectively reducing the risk of electrolyte leakage from the battery cell 20.

Moreover, when assembling the battery cell 20, it is necessary to connect the electrode assembly 22 to the current collecting member 23 and weld the current collecting member 23 to the end cover 24 in advance outside the case 21, and then accommodate the connected electrode assembly 22 and current collecting member 23 in the case 21. In this way, it is easy to find the welding position between the current collecting member 23 and the end cover 24 accurately, thereby allowing efficient assembly.

According to some embodiments of the present application, the first welded portion 25 is configured to be formed by emitting laser in a direction intersecting with the central axis of the electrode assembly 22 to melt the current collecting member 23 and the end cover 24.

The direction of the central axis of the electrode assembly 22 (i.e., the axial direction of the electrode assembly 22) is shown as the direction X in Fig. 5. The direction perpendicular to the direction X of the central axis of the electrode assembly 22 is the direction Y. The laser is emitted to the current collecting member 23 and the end cover 24 along the direction intersecting with the direction X, so that a part of the current collecting member 23 and a part of the end cover 24 are melted, and the melted parts form the first welded portion 25. In an example, the laser is emitted to the current collecting member 23 and the end cover 24 along the direction Y, that is, the laser is along the direction perpendicular to the direction X of the central axis of the electrode assembly 22. This facilitates preparation of the first welded portion 25 without penetrating the end cover 24, which reduces the risk of electrolyte leakage from the battery cell.

In another example, the laser may also be emitted to the current collecting member 23 and the end cover 24 in a direction intersecting with the direction X and not perpendicular to the direction X, so as to allow the emitting direction of the laser to be adjusted according to the needs of the actual welding position and angle. It should also be noted that the laser may also be replaced by ultrasonic waves, as long as the current collecting member 23 and the end cover 24 can be melted. Among them, along the direction X, the first welded portion 25 does not run though the end cover 24, that is, the end cover 24 is not penetrated by the laser in the direction X.

This embodiment can prevent laser from penetrating the end cover when forming the first welded portion by laser welding while the emitting direction of the laser can be controlled to avoid damage to the electrode assembly.

According to some embodiments of the present application, the current collecting member 23 includes a first current collecting portion 231 and a second current collecting portion 232. The first current collecting portion 231 is electrically connected to the tabs, and the second current collecting portion 232 is connected to the end of the first current collecting portion 231 close to the inner side face of the case 21, and the second current collecting portion 232 is welded and connected to the end cover 24 to form the first welded portion 25.

In some embodiments, the first current collector 231 and the tab may also be connected by welding. The laser can be emitted along the axial direction X of the electrode assembly 22, and the laser impinges on the first current collecting portion 231, so that part of the first current collecting portion 231 is melted and penetrated, and the laser penetrates the first current collecting portion 231 and impinges on the tab, so that part of the tab is melted.

The second current collecting portion 232 is welded and connected to the end cover 24 to form a first welded portion 25. The first welded portion 25 may have an annular structure. In this case, the entire circumference of the second current collecting portion 232 is welded to the entire circumference of the end cover 24. Alternatively, the first welded portion 25 may also have a non-annular structure. Alternatively, the second current collecting portion 232 is welded and connected to the end cover 24 to form multiple first welded portions 25, and the multiple first welded portions 25 are arranged at an interval around the central axis of the electrode assembly 22. The multiple first welded portions 25 can be evenly distributed around the central axis of the electrode assembly 22. In this way, on the one hand, all the first welded portions 25 are dispersedly arranged, which is beneficial to avoiding the occurrence of interference among the multiple first welded portions 25 during welding. On the other hand, when the end cover 24 is located at the bottom of the battery cell 20, the gravity exerted by the electrode assembly 22 on the current collecting member 23 and the gravity of the current collecting member 23 itself can act evenly on the multiple first welding portions 25 to reduce the probability that the first welded portions 25 between the current collecting member 23 and the end cover 24 are torn under uneven forces, which is further beneficial to improving the reliability of connection between the current collecting member 23 and the end cover 24.

This design ensures that the current collecting member 23 can be electrically connected to the tab through the first current collecting portion 231 to achieve the function of electric conduction, and at the same time ensures that the current collecting member 23 can be welded to the end cover 24 through the second current collecting portion 232, which can effectively separate the connection point between the current collecting member 23 and the tab from the welding point between the current collecting member 23 and the end cover 24.

According to some embodiments of the present application, with continued reference to Figs. 4 to 6, the first current collecting portion 231 may have a flat-plate shaped structure, and the second current collecting portion 232 protrudes from the first current collecting portion 231 in a direction facing away from the electrode assembly 22.

That is, the second current collecting portion 232 is located on the side of the flat-plate shaped first current collector facing away from the electrode assembly 22. That is, the second current collecting portion 232 has an annular structure, and the second current collecting portion 232 can be configured so that its inner side face abuts against the end cover 24, or the second current collecting portion 232 can also be configured such that its outer side face abuts against the end cover 24.

As such, the current collecting member 23 has a non-flat-plate shaped structure, and the second current collecting portion 232 protrudes from the first current collecting portion 231. In this way, the second current collecting portion 232 can be easily welded and connected to the end cover 24.

Moreover, when the first current collecting portion 231 is welded and connected to the tab of the electrode assembly 22, since the second current collecting portion 232 protrudes from the first current collecting portion 231, the welding point between the first current collecting portion 231 and the tab can be effectively separated from the first welded portion 25. In this way, when the second current collecting portion 232 is welded and connected to the end cover 24, the laser will not be projected onto the welded point between the first current collecting portion 231 and the tab to cause this welding point to be affected.

According to some embodiments of the present application, as shown in Fig. 6, a first abutting surface 243 is formed on the end cover 24, the first abutting surface 243 is opposite to the inner side face of the case 21, and the second current collecting portion 232 abuts against and is welded and connected to the first abutting surface 243 to form the first welded portion 25.

Among them, the first abutting surface 243 is located inside the case 21 and opposite to the inner side face of the case 21. Taking the second current collecting portion 232 of an annular structure as an example, the first abutting surface 243 is a circumferential surface.

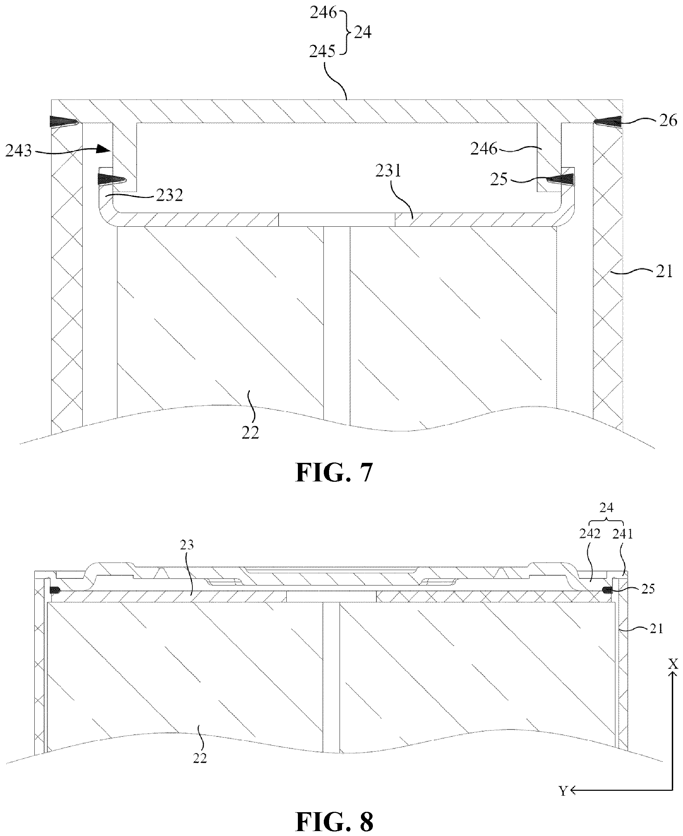

Fig. 7 is a schematic partial sectional view of a battery cell 20 provided in some other embodiments of the present application. For example, as shown in Fig. 7, the end cover 24 may include a cover plate 245 and an abutting portion 246 connected to each other. The cover plate 245 has a flat-plate shaped structure, the cover plate 245 covers the opening, and the abutting portion 246 protrudes from the side of the cover plate 245 facing the electrode assembly 22, the abutting portion 246 has an annular structure, and the abutting portion 246 extends into the case 21. In this example, as shown in Fig. 7, the outer side face of the abutting portion 246 may be the first abutting surface 243, and the second current collecting portion 232 is located between the first abutting surface 243 and the inner side face of the case 21, the second current collecting portion 232 surrounds the outer side of the abutting portion 246 to be welded and connected to the abutting portion 246; alternatively, the inner side face of the abutting portion 246 may also be the first abutting surface 243, the first abutting surface 243 is located between the second current collecting portion 232 and the inner side face of the case 21, and the abutting portion 246 surrounds the outer side of the second current collecting portion 232 and the two are welded and connected to each other.

The first abutting surface 243 is formed on the end cover 24 and the second current collecting portion 232 abuts against and is welded and connected to the first abutting surface 243, so that the first abutting surface 243 can provide positioning to facilitate the accurate finding of the welding position between the end cover 24 and the current collecting member 23.

It is worth mentioning that those skilled in the art often easily think of welding the current collecting member 23 to the inner side face of the case 21 to the penetration depth of the formed welding seam smaller than the thickness of the case 21, so that the welding seam does not run through the case 21, and then the electrolyte cannot overflow out of the battery cell 20 along the crack generated in the welding seam. However, when assembling this battery cell 20, the current collecting member 23 needs to be accommodated in the case 21 first, and then the laser is emitted from the case 21 to the current collecting member 23 and the case 21 to weld them. However, positioning of the current collecting member 23 in the case 21 is difficult, and it is difficult to find the installation position for the current collecting member 23 accurately. **In** contrast, when assembling the battery cell 20 of this embodiment, by abutting the second current collecting portion 232 of the current collecting member 23 against the first abutting surface 243, the installation position for the current collecting member 23 can be easily found.

According to some embodiments of the present application, with continued reference to Fig. 6, along the axial direction X of the electrode assembly 22, the minimum distance between the first welded portion 25 and the electrode assembly 22 is a first distance h0, and the penetration depth a of the first welded portion and the first distance h0 satisfy the condition: a/h0≤0.5.

Taking the second current collecting portion 232 located between the first abutting surface 243 and the inner side face of the case 21 as an example, if the first welded portion 25 tapers from one end close to the inner side face of the case 21 to the other end away from the inner side face of the case 21, then the minimum distance between the first welded portion 25 and the electrode assembly 22 may refer to the distance between the end of the first welded portion 25 close to the inner side face of the case 21 and the electrode assembly 22 along the axial direction X of the electrode assembly 22.

The penetration depth a of the first welded portion 25 refers to the maximum size of the first welded portion 25 along the direction Y, that is, the sum of the penetration depth of the first welded portion 25 formed on the second current collecting portion 232 and the penetration depth of the first welded portion 25 formed on the end cover 24, and the penetration depth of the first welded portion 25 formed on the end cover 24 refers to the distance from the deepest position of the melted zone formed on the end cover 24 to the first abutting surface 243.

In this embodiment, with the design a/h0≤0.5 and then h0≥2a, the minimum distance h0 between the first welded portion 25 and the electrode assembly 22 is enabled to be much larger than the penetration depth a of the first welded portion 25. In this way, during assembly of the battery cell 20, first the first current collecting portion 231 of the current collecting member 23 is welded and connected to the tab and then the laser is emitted to the second current collecting member 23 and the end cover 24 to weld and connect the second current collecting member 23 to the end cover 24, at the time of which not only is the laser prevented from being projected onto the electrode assembly 22 and causing damage to the electrode assembly 22, but also the high temperature of the laser does not burn the electrode assembly 22.

In some embodiments, it can further be designed such that a/h0≤0.4, then h0≥2.5a. In this way, the minimum distance h0 between the first welded portion 25 and the electrode assembly 22 is further increased to further increase the possibility that the electrode assembly 22 is not affected and damaged by the laser.

Fig. 8 is a schematic sectional view of a battery cell 20 provided in yet some other embodiments of the present application. According to some other embodiments of the present application, as shown in Fig. 8, both the first current collecting portion 231 and the second current collecting portion 232 may have a flat-plate shaped structure, so that the current collecting member 23 has a flat-plate shaped structure.

In this embodiment, for the cylindrical electrode assembly 22 and case 21, the flat-plate shaped current collecting member 23 is circular, where the first current collecting portion 231 is circular and the second current collecting portion 232 is annular.

In this way, the second current collecting portion 232 of the current collecting member 23 does not occupy additional space in the case 21 along the axial direction X of the electrode assembly 22. In this way, without changing the overall height of the battery cell 20, a larger number of electrode plates can be accommodated inside the battery cell 20, which is beneficial to increasing the active material capacity of the battery cell 20, thereby increasing the energy density of the battery cell 20.

According to some embodiments of the present application, with continued reference to Fig. 8, when the current collecting member 23 has a flat-plate shaped structure, the end cover 24 includes a connecting portion 241 and a main body portion 242 connected to each other, the connecting portion 241 is connected to the open-end face, the connecting portion 241 surrounds an outer edge of the main body portion 242, the main body portion 242 includes a protrusion (not shown) toward the electrode assembly 22, and the protrusion is welded and connected to the second current collecting portion 232 to form the first welded portion 25. The open-end face refers to the surface of the case 21 surrounding the opening.

The connecting portion 241 overlaps and is connected to the open-end face of the case 21 so that the end cover 24 can seal the case 21. The protrusion of the main body portion 242 protrudes toward the electrode assembly 22 relative to the connecting portion 241. At least part of the main body portion 242 can protrude into the case 21 to form a protrusion and be welded to the second current collecting portion 232.

In this example, the connecting portion 241 and the main body portion 242 can be an integrated structure made by an integral molding process. **In** this way, the assembly process of the connecting portion 241 and the main body portion 242 can be omitted, and the structural strength of the end cover 24 can be improved without increasing the cost. For example, the plate body can be stamped by a stamping process to form the connecting portion 241 and the main body portion 242.

In this way, at least part of the main body portion 242 on the end cover 24 protrudes toward the electrode assembly 22 relative to the connecting portion 241 to form a protrusion, and the laser is projected onto the flat-plate shaped current collecting member 23 and the protrusion of the main body portion 242 of the end cover 24 to weld and connect them, at which time the welding position can be easily found accurately, the difficulty of laser positioning is reduced, and the assembly is efficient.

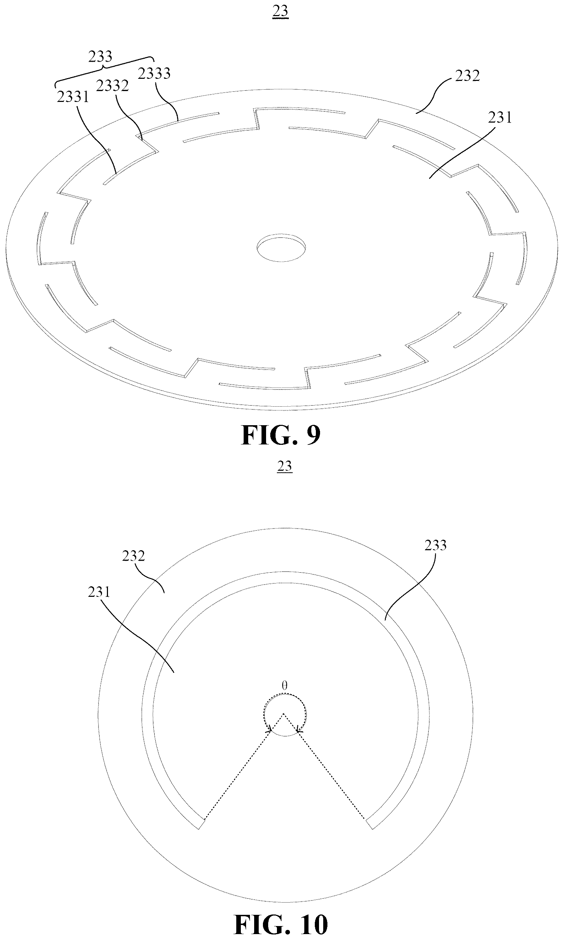

Fig. 9 is a schematic structural view of a first current collecting member 23 in a battery cell 20 provided in yet some other embodiments of the present application. According to some embodiments of the present application, with reference to Fig. 9, the current collecting member 23 is provided with a partition hole 233, the partition hole 233 separates the current collecting member 23 into a first current collecting portion 231 and a second current collecting portion 232; and the partition hole 233 is configured to enable the current collecting member 23 to have a first state and a second state, where in the first state, the current collecting member 23 has a flat-plate shaped structure, and when the current collecting member 23 is in the second state, the second current collecting portion 232 protrudes from the first current collecting portion 231 in a direction facing away from the electrode assembly 22.

That is, the first current collecting portion 231 and the second current collecting portion 232 are separated by the partition hole 233. The current collecting member 23 is made of a deformable material, such as copper, aluminum alloy, memory alloy, and the like. **In** this way, the second current collecting portion 232 can deform relative to the first current collecting portion 231 under the action of external force, so that the second current collecting portion 232 can extend toward the side of the first current collecting portion 231.

A possible assembly process of the battery cell 20 of this embodiment is as follows. The current collecting member 23 in the first state is placed on the electrode assembly 22 and the first current collecting portion 231 is connected to the tab. A pulling force is exerted on the second current collecting portion 232 so that the second current collecting portion 232 is pulled up to protrude toward the side facing away from the electrode assembly 22, so that the current collecting member 23 switches from the first state to the second state. Then the laser is emitted along the direction Y to the second current collecting portion 232 and the end cover 24 so that the second current collecting portion 232 is welded to the end cover 24. A pressing force is exerted on the end cover 24, and the end cover 24 brings along the second current collecting portion 232 to move in the direction close to the electrode assembly 22, until the current collecting member 23 switches from the second state to the first state, and the second current collecting portion 232 is restored to the flat-plate shaped structure.

Another possible assembly process of the battery cell 20 of this embodiment is as follows. A pulling force is exerted on the second current collecting portion 232 of the current collecting member 23 in the first state, so that the second current collecting portion 232 is pulled up to protrude toward the side of the first current collecting portion 231, so that the current collecting member 23 switches from the first state to the second state. The current collecting member 23 in the second state is placed on the electrode assembly 22 and the second current collecting portion 232 protrudes in the direction facing away from the electrode assembly 22 relative to the first current collecting portion 231, so that the first current collecting portion 231 is connected to the tab. The laser is emitted along the direction Y to the second current collecting portion 232 and the end cover 24 so that the second current collecting portion 232 is welded to the end cover 24. A pressing force is exerted on the end cover 24, and the end cover 24 brings along the second current collecting portion 232 to move in the direction close to the electrode assembly 22, until the current collecting member 23 switches from the second state to the first state, and the second current collecting portion 232 is restored to the flat-plate shaped structure.

Through such an arrangement, it is ensured that during assembly of the battery cell 20, by pulling up the second current collecting portion 232, the current collecting member 23 is welded to the end cover 24 in the second state, so as to prevent the laser from being projected onto the electrode assembly 22 during welding and damaging the electrode assembly 22, and it is also ensured that in the assembled battery cell 20, the second current collecting portion 232 of the current collecting member 23 does not occupy additional space in the case 21 along the axial direction X of the electrode assembly 22, thereby increasing the energy density of the battery cell 20.

The specific implementation manner in which the partition hole 233 is configured to enable the current collecting member 23 to switch between the first state and the second state will be described in detail below with reference to the accompanying drawings.

In some examples, the partition hole 233 is configured such that the second current collecting portion 232 is an integral piece and the second current collecting portion 232 has an annular structure.

In this embodiment, neither end of the partition hole 233 extends to the outer side face of the second current collecting portion 232, so that the second current collecting portion 232 is not interrupted by the partition hole 233 but rather is formed as an integral piece, and it can be ensured that the second current collecting portion 232 is connected with the first current collecting portion 231.

With this design, since the second current collecting portion 232 has an integral structure, during assembly of the battery cell 20, it is needed to apply only one acting force to the integral second current collector to switch the current collecting member 23 from the first state to the second state.

Fig. 10 is a front view of a second current collecting member 23 in a battery cell 20 provided in yet some other embodiments of the present application. For example, as shown in Fig. 10, only one partition hole 233 may be formed on the current collecting member 23. The partition hole 233 is arc-shaped, and the central angle θ of the arc-shaped partition hole 233 satisfies the condition 180°≤θ < 360°. In this way, more than one-half part of the second current collecting portion 232 is isolated from the first current collecting portion 231 by the partition hole 233, and part of the second current collecting portion 232 can be bent under an acting force to protrude from the first current collecting portion 231. Moreover, the central angle θ of the arc-shaped partition hole 233 is not equal to 360°, to ensure that the second current collecting portion 232 can still be connected to the first current collecting portion 231.

In some other examples, as shown in Fig. 9, multiple partition holes 233 are formed on the current collecting member 23, and the multiple partition holes 233 are arranged at an interval around the central axis of the electrode assembly 22.

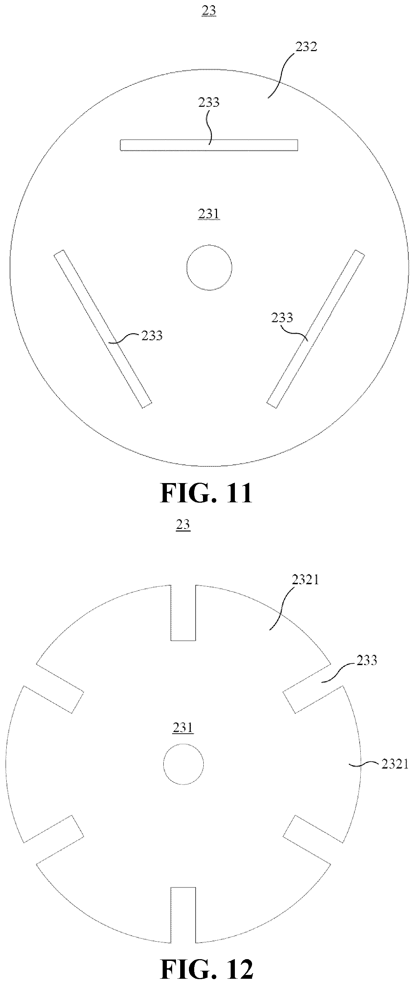

The shape of the partition holes 233 is not limited, and every two adjacent partition holes 233 are not in communication. Fig. 11 is a front view of a third current collecting member 23 in a battery cell 20 provided in yet some other embodiments of the present application. For example, in the example shown in Fig. 11, the partition hole 233 may be an elongated hole, and the extension direction of the elongated hole is perpendicular to the central axis of the electrode assembly 22, and when the first current collecting portion 231 is circular, the extension direction of the elongated hole is perpendicular to the circular first current collecting portion 231. Of course, in other embodiments of the present application, the partition hole 233 may also be arc-shaped, circular, elliptical, S-shaped, Z-shaped, L-shaped, or the like, which is not limited in this embodiment. The multiple partition holes 233 may also be evenly distributed around the central axis of the electrode assembly 22.

As another example, in the example shown in Fig. 9, the partition holes 233 may be designed to include a first through hole 2331, a second through hole 2332, and a third through hole 2333 that are sequentially in communication. Among them, the first through hole 2331 and the third through hole 2333 are both arc-shaped. The centers of the arc-shaped first through hole 2331 and third through hole 2333 are both located on the central axis of the electrode assembly 22. The third through hole 2333 is located on the side of the first through hole 2331 away from the central axis of the electrode assembly 22, and the second through hole 2332 extends in a direction perpendicular to the central axis of the electrode assembly 22.

For the circular current collecting member 23, the first current collecting member 23 is circular, and the second through hole 2332 may specifically extend along the radial direction of the circular first current collecting member 23. Alternatively, in other embodiments, there may be an included angle between the extension direction of the second through hole 2332 and the radial direction of the circular first current collecting member 23.

Moreover, in some embodiments, as shown in Fig. 9, the third through hole 2333 in each partition hole 233 is located on the side of the first through hole 2331 of one of the adjacent partition holes 233 away from the axis of the electrode assembly 22.

With such a design in this embodiment, the partition hole 233 has both a part extending along the circumferential direction of the current collecting member 23 and a part extending along the direction perpendicular to the central axis of the electrode assembly 22, making it easier for the second current collecting portion 232 as an integral structure to be bent under the action of external force and protrude from the first current collecting portion 231.

Fig. 12 is a front view of a fourth current collecting member 23 in a battery cell 20 provided in yet some other embodiments of the present application. According to some other embodiments of the present application, with reference to Fig. 12, multiple partition holes 233 are formed on the current collecting member 23. The multiple partition holes 233 are arranged at an interval around the central axis of the electrode assembly 22, and one end of each partition hole 233 is close to the central axis of the electrode assembly 22 and the other end extends to the outer side face of the second current collecting portion 232.

In this way, the partition holes 233 can interrupt the second current collecting portion 232, and the second current collecting portion 232 is formed to include multiple sub-current collectors 2321. The multiple sub-current collectors 2321 are arranged at an interval around the central axis of the electrode assembly 22, with every two adjacent sub-current collectors 2321 being separated by a partition hole 233. If two partition holes 233 are formed, the second current collecting portion 232 has two sub-current collectors 2321; if three partition holes 233 are formed, then the second current collecting portion 232 has three sub-current collectors 2321. It can be seen that the number of partition holes 233 is equivalent to the number of sub-current collectors 2321.

For example, as shown in Fig. 12, the partition hole 233 may be an elongated hole, and the partition hole 233 extends along the radial direction of the circular first current collecting portion 231. The elongated partition hole 233 may also be designed such that there is an included angle between its extension direction and the radial direction of the circular first current collecting portion 231. **In** this embodiment, the shape of the partition hole 233 is also not limited. For example, the partition hole 233 may be L-shaped, T-shaped, or the like, which is not limited in this embodiment.

When assembling the battery cell 20 of this embodiment, first the current collecting member 23 in the first state can be placed on the electrode assembly 22 and the first current collecting portion 231 is connected to the tab, and then an acting force is exerted in sequence on the multiple sub-current collectors 2321, so that all sub-current collectors 2321 can be bent and deformed under the action of external force to protrude from the first current collecting portion 231 in the direction facing away from the electrode assembly 22, so that the current collecting member 23 switches from the first state to the second state.

With this design, the partition holes 233 extend to the outer side face of the second current collecting portion 232, the partition holes 233 can interrupt the second current collecting portion 232, and the multiple sub-current collectors of the second current collecting portion 232 are separated from each other. In this way, during assembly of the battery cell 20, by applying an acting force to each sub-current collector 2321 individually, each sub-current collector 2321 is deformed by force and protrudes in the direction facing away from the electrode assembly 22. Since two adjacent sub-current collectors 2321 do not affect each other, after operations are applied to all sub-current collectors 2321, the current collecting member 23 can reach the second state without adjusting the second current collecting portion 232.

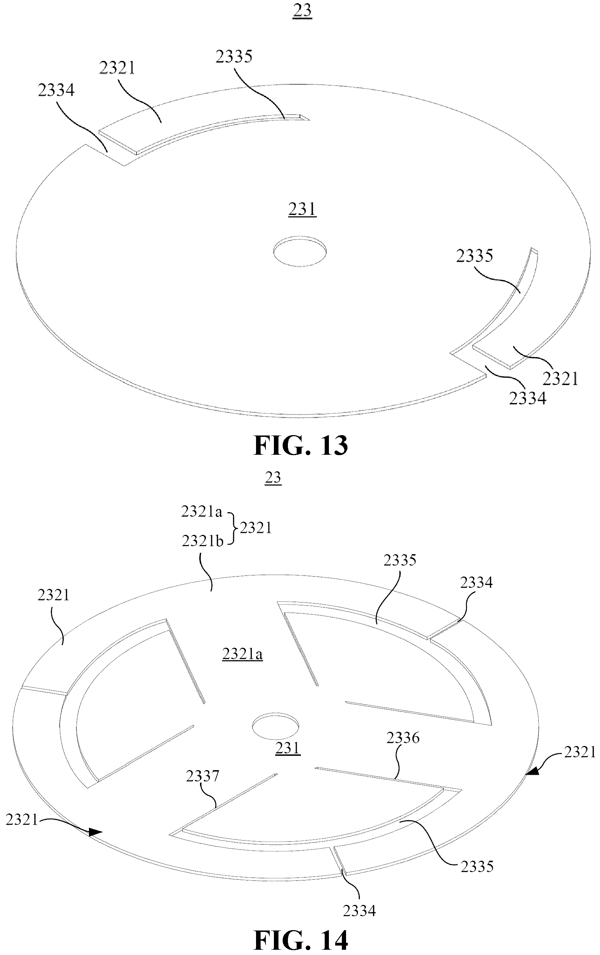

Fig. 13 is a schematic structural view of a fifth current collecting member 23 in a battery cell 20 provided in yet some other embodiments of the present application. As another example, referring to Fig.13, the partition holes 233 can be designed to include a first open hole 2334 and a second open hole 2335 in communication with each other. The first open hole 2334 is located on the side of the second open hole 2335 away from the central axis of the electrode assembly 22. The first open hole 2334 extends to the outer side face of the second current collecting portion 232 in the direction perpendicular to the central axis of the electrode assembly 22. The second open hole 2335 is arc-shaped, and the center of the arc-shaped second open hole 2335 is located on the central axis of the electrode assembly 22.

For the circular first current collecting portion 231, the first open hole 2334 can extend along the radial direction of the circular first current collecting portion 231. Alternatively, there may be an included angle between the extension direction of the first open hole 2334 and the radial direction of the circular first current collecting portion 231. The first open hole 2334 can be designed to be connected to either end of the arc-shaped second open hole 2335, or the first open hole 2334 can also be designed to be connected to the middle of the arc-shaped second open hole 2335. The above-mentioned second open hole 2335 may also be replaced with other shapes such as an elongated shape, which is not limited in this embodiment.

Compared with the technical solution in which the partition hole 233 extends along the radial direction of the circular first current collecting portion 231, with such a design in this embodiment, the partition hole 233 includes both a first open hole 2334 extending in the direction perpendicular to the central axis of the electrode assembly 22 and a second open hole 2335 extending in the circumferential direction of the current collecting member 23, so that each sub-current collector 2321 can have a cantilever plate. In this way, during assembly of the battery cell 20, by applying an acting force to the cantilever plate, the cantilever plate can be easily pulled to protrude from the first current collecting portion 231, and when the current collecting member 23 is in the second state, the cantilever plate can still be maintained as a flat plate to ensure that the laser can be smoothly projected onto the cantilever plate and the end cover 24 in the direction perpendicular to the central axis of the electrode assembly 22, so that the second current collecting portion 232 is welded to the end cover 24.

Fig. 14 is a schematic structural view of a sixth current collecting member 23 in the battery cell 20 provided in yet some other embodiments of the present application. According to some embodiments of the present application, referring to Fig. 14, in the solution where the partition hole 233 includes a first open hole 2334 and a second open hole 2335, the partition hole 233 may further include a third open hole 2336 and a fourth open hole 2337 that are in communication with the second open hole 2335, and the third open hole 2336 and the fourth open hole 2337 are both located on the side of the second open hole 2335 close to the central axis of the electrode assembly 22 and extend in the direction perpendicular to the central axis of the electrode assembly 22.

In the solution where the first open hole 2334 is connected to either end of the arc-shaped second open hole 2335, the partition hole 233 separates the second current collecting portion 232 into multiple T-shaped sub-current collectors 2321. Each T-shaped sub-current collector 2321 includes a first part 2321a and a second part 2321b connected to each other. The first part 2321a is located on the side of the second part 2321b close to the central axis of the electrode assembly 22. The first part 2321a is connected to the first current collecting portion 231, and both ends of the second part 2321b are formed as a cantilever plate.

With this arrangement, the sub-current collector 2321 includes a first part 2321a and a second part 2321b. The first part 2321a is connected to the first current collecting portion 231, the second part 2321b is close to the inner side face of the case 21 and connected to the first part 2321a, and the end of the second part 2321b is formed as a cantilever plate. In this way, during assembly of the battery cell 20, by applying an acting force to the cantilever plate, the first part 2321a can be bent in the direction facing away from the electrode assembly 22, and the first part 2321a brings along the second part 2321b to protrude from the first current collecting portion 231, and the second part 2321b can still be maintained as a flat plate, so that the second part 2321b can be easily welded to the end cover 24 by laser.

According to some embodiments of the present application, with continued reference to Fig. 6, the end cover 24 is welded and connected to the open-end face of the case 21 to form the second welded portion 26. The open-end face refers to the surface of the case 21 surrounding the opening.

The second welded portion 26 can be formed by irradiating the case 21 with ultrasonic waves or laser, for example. In this embodiment, the end cover 24 is designed to be welded and connected to the open-end face, so that the end cover 24 is electrically connected to the case 21. In this way, the case 21 can also serve as an electrode lead-out pole. Specifically, if the first tab is the positive tab and the second tab is the negative tab, then the end cover 24 or the case 21 is the positive electrode lead-out pole and the electrode terminal is the negative electrode lead-out pole; and if the first tab is the negative tab and the second tab is the positive tab, then the end cover 24 or the case 21 is the negative electrode lead-out pole and the electrode terminal is the positive electrode lead-out pole.

As can be known from this, the end cover 24 and the case 21 are reliably connected by welding, which is beneficial to improving the sealing of the case 21 by the end cover 24, and the case 21 can also serve as an electrode lead-out pole.

In the following, the method of forming the second welded portion 26 is illustrated with laser welding as an example.

In some possible examples, the laser can be emitted along the axial direction X of the electrode assembly 22, and the laser is projected onto the end cover 24, so that the end cover 24 is partially melted. The laser penetrates the end cover 24 and is projected onto the case 21, so that the case 21 is partially melted, thereby forming the second welded portion 26.

In some other possible examples, as shown in Fig. 6, the second welded portion 26 is configured to be formed by emitting laser in the direction Y perpendicular to the central axis of the electrode assembly 22 to melt the end cover 24 and the case 21.

Compared with the fact that the laser is emitted to the end cover 24 along the axial direction X of the electrode assembly 22 to form the second welded portion 26, in this embodiment, the laser is projected onto the end cover 24 and the case 21 at the same time along the direction Y perpendicular to the central axis of the electrode assembly 22, so that part of the end cover 24 and part of the case 21 are melted to form the second welded portion 26. In this way, the end cover 24 will not be penetrated by the laser, and the second welded portion 26 may not run through the end cover 24. As such, when the thermal expansion coefficients of the material forming the end cover 24 and the material forming the case 21 are greatly different, even if a crack occurs at the welding point (i.e., the second welded portion 26) between the end cover 24 and the case 21, the electrolyte inside the battery cell 20 can be prevented from overflowing out of the battery cell 20 via the crack, thereby effectively reducing the risk of electrolyte leakage from the battery cell 20.

According to some embodiments of the present application, as shown in Fig. 6, along the axial direction X of the electrode assembly 22, the minimum distance between the second welded portion 26 and the electrode assembly 22 is a second distance h1, and the penetration depth b of the second welded portion 26 formed on the end cover 24 and the second distance h1 satisfy the condition: b/h1≤0.5.

When the laser is projected along the direction Y to form the second welded portion 26, if the second welded portion 26 tapers along the direction X from one end away from the central axis of the electrode assembly 22 to the other end close to the central axis of the electrode assembly 22, the minimum distance h1 between the second welded portion 26 and the electrode assembly 22 can be understood as the distance between the end of the second welded portion 26 away from the central axis of the electrode assembly 22 and the electrode assembly 22 along the axial direction X of the electrode assembly 22.

The penetration depth b of the second welded portion 26 formed on the end cover 24 refers to the distance from the deepest part of the melted zone formed on the end cover 24 to the outer peripheral surface of the end cover 24.

In this embodiment, with the design b/h1≤0.5 and then h1≥ 2b, the minimum distance h1 between the second welded portion 26 and the electrode assembly 22 is enabled to be much larger than the penetration depth b of the second welded portion 26. In this way, during assembly of the battery cell 20, when the laser is emitted to weld and connect the end cover 24 to the case 21, not only is the laser prevented from being projected onto the electrode assembly 22 and causing damage to the electrode assembly 22, but also the high temperature of the laser will not burn the electrode assembly 22.

In some embodiments, it can further be designed such that b/h1≤0.4, then h1≥2.5b. In this way, the minimum distance h1 between the second welded portion 26 and the electrode assembly 22 is further increased, which helps to further improve the possibility that the electrode assembly 22 is not impacted and damaged by the laser.

According to some embodiments of the present application, in an implementation where the battery cell 20 has both the first welded portion 25 and the second welded portion 26, the first welded portion 25 is located between the second welded portion 26 and the electrode assembly 22 along the axial direction X of the electrode assembly 22.

In this way, there is a distance between the first welded portion 25 and the second welded portion 26 so that they are not likely to interfere with each other. Then during assembly of the battery cell 20, first the laser is emitted to the current collecting member 23 and the end cover 24 to form the first welded portion 25, and then when the laser is emitted to the case 21 and the end cover 24 to form the second welded portion 26, the laser will not be projected onto the first welded portion 25, thereby preventing the first welded portion 25 from being affected by the second welded portion 26.

According to some embodiments of the present application, as shown in Figs. 5 and 6, the end cover 24 may include a main body portion 242 and a connecting portion 241 surrounding the outer side of the main body portion 242. The connecting portion 241 is welded and connected to the open-end face to form the second welded portion 26. A second abutting surface 244 is formed on the main body portion 242. The second abutting surface 244 abuts against the inner side face of the case 21.

The connecting portion 241 overlaps the open-end face of the case 21. The main body portion 242 protrudes toward the electrode assembly 22 relative to the connecting portion 241. At least part of the main body portion 242 extends into the case 21 so that the second abutting surface 244 can be opposite to the inner side face of the case 21. For the cylindrical battery cell 20, the case 21 is cylindrical, the inner side face of the case 21 is a circumferential surface, and the second abutting surface 244 is correspondingly a circumferential surface.

With this arrangement, the abutting between the second abutting surface 244 and the case 21 can provide the function of positioning. When assembling the battery cell 20, the electrode assembly 22, the current collecting member 23 and the end cover 24 connected to each other are moved so that the electrode assembly 22 and the current collecting member 23 are accommodated in the case 21, meanwhile, the second abutting surface 244 of the end cover 24 abuts against the inner side face of the case 21 to avoid skewed installation of the electrode assembly 22 and the current collecting member 23 in the case 21.

According to some embodiments of the present application, in an implementation where the end cover 24 includes a main body portion 242 and a connecting portion 241, the main body portion 242 may also be in interference fit with the cavity in the case 21.

For example, for the cylindrical battery cell 20, the case 21 is cylindrical, and then the inner diameter of the case 21 is smaller than the outer diameter of the main body portion 242 so that the main body portion 242 is in interference fit with the cavity.

As can be known from this, after the end cover 24 covers the case 21, there is no gap between the main body portion 242 of the end cover 24 and the inner side face of the case 21, so that the end cover 24 is tightly connected to the case 21 with high reliability of connection between the two.

In some embodiments, the tab is electrically connected to the case 21 through the current collecting member 23 and the end cover 24 in sequence.

By arranging the tab to be electrically connected to the case 21 through the current collecting member 23 and the end cover 24 in sequence, the electrodes in the battery cell can be smoothly led out, and the case can be used as an electrode lead-out pole to facilitate subsequent circuit connections.

In a specific embodiment, referring to Figs. 5 and 6, the battery cell 20 includes the case 21, the electrode assembly 22, the end cover 24 and the current collecting member 23. The case 21 has an opening and an open-end face surrounding the opening. The electrode assembly 22 is accommodated in the case 21 and has tabs. The current collecting member 23 is accommodated in the case 21. The current collecting member 23 includes a first current collecting portion 231 and a second current collecting portion 232. The first current collecting portion 231 has a flat-plate shaped structure and is welded and connected to the tabs. The second current collecting portion 232 is connected to the end of the first current collecting portion 231 close to the inner side face of the case 21. The second current collecting portion 232 protrudes from the first current collecting portion 231 in a direction facing away from the electrode assembly 22.

The end cover 24 includes a main body portion 242 and a connecting portion 241. The connecting portion 241 surrounds the outer edge of the main part portion 242. The connecting portion 241 overlaps the open-end face. The main body portion 242 is connected to the connecting portion 241. Part of the main body portion 242 protrudes toward the electrode assembly 22 relative to the connecting portion 241. Furthermore, a first abutting surface 243 and a second abutting surface 244 are formed on the main body portion 242, and both the first abutting surface 243 and the second abutting surface 244 are opposite to the inner side face of the case 21. The first abutting surface 243 is not in contact with the inner side face of the case 21. The inner side face of the second current collecting portion 232 abuts against the first abutting surface 243, and the laser is emitted along the direction Y perpendicular to the central axis of the electrode assembly 22 to melt the second current collecting portion 232 and the end cover 24, so that the current collecting member 23 is welded and connected to the end cover 24 to form the first welded portion 25, and the first welded portion 25 does not run through the end cover 24 along the axial direction X of the electrode assembly 22. The second abutting surface 244 is in contact with the inner side face of the case 21, and the main body portion 242 is in interference fit with the cavity in the case 21. Here,

the connecting portion 241 is welded and connected to the case 21 to form the second welded portion 26, and the second welded portion 26 is configured to be formed by emitting laser in the direction Y perpendicular to the central axis of the electrode assembly 22 to melt the end cover 24 and the case 21. The first welded portion 25 is located between the second welded portion 26 and the electrode assembly 22 along the axis X of the electrode assembly 22.

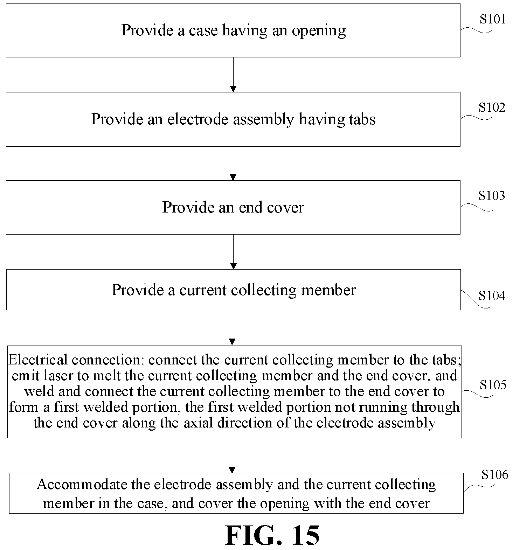

Fig. 15 is a schematic flow chart of a method for manufacturing a battery cell 20 provided in some embodiments of the present application. According to some embodiments of the present application, with reference to Fig. 15, the method for manufacturing the battery cell 20 may specifically include the following steps.

In Step S101, a case 21 is provided. The case 21 has an opening.

In Step S102, an electrode assembly 22 is provided. The electrode assembly 22 has tabs.

In Step S103, an end cover 24 is provided.

In Step S104, a current collecting member 23 is provided.

In Step S105 of electrical connection, the current collecting member 23 is connected to the tabs. Laser is emitted to melt the current collecting member 23 and the end cover 24 to weld and connect the current collecting member 23 to the end cover 24 to form a first welded portion 25, and the first welded portion 25 does not run through the end cover 24 along the axial direction of the electrode assembly 22.

In Step S106, the electrode assembly 22 and the current collecting member 23 are accommodated in the case 21, and the opening is covered with the end cover 24.

It should be understood that in the method of this embodiment, the order of the step S101, step S102, step S103 and step S104 is not limited. For example, the step S101, step S103, step S104 and step S102 may be performed in sequence.

In step S105, the current collecting member 23 may be electrically connected to the tabs by welding, so that electricity can be conducted between the current collecting member 23 and the tabs.

In the battery cell 20 manufactured by the manufacturing method of this embodiment, the first welded portion 25 formed by welding the current collecting member 23 to the end cover 24 does not run through the end cover 24 along the axial direction of the electrode assembly 22. In this way, even if a crack occurs at the welding point between the current collecting member 23 and the end cover 24, the electrolyte inside the battery cell 20 cannot overflow out of the battery cell 20 via the crack, thereby effectively reducing the risk of electrolyte leakage from the battery cell 20.

According to some embodiments of the present application, the current collecting member 23 includes a first current collecting portion 231 and a second current collecting portion 232. Both the first current collecting portion 231 and the second current collecting portion 232 have a flat-plate shaped structure, so that the current collecting member 23 has a flat-plate shaped structure. The current collecting member 23 is provided with a partition hole 233, the partition hole 233 separates the current collecting member 23 into the first current collecting portion 231 and the second current collecting portion 232; and the partition hole 233 is configured to enable the current collecting member 23 to have a first state and a second state, where in the first state, the current collecting member 23 has a flat-plate shaped structure, and when the current collecting member 23 is in the second state, the second current collecting portion 232 protrudes from the first current collecting portion 231 in a direction facing away from the electrode assembly 22.

In this embodiment, for example, the step S105 can specifically be implemented by the following steps.

In Step S1051, the first current collecting portion 231 is connected to the tabs.

In Step S1052, the second current collecting portion 232 of the current collecting member 23 is pulled toward the side facing away from the electrode assembly 22, so that the current collecting member 23 switches from the first state to the second state.

In Step S1053, laser is emitted in a direction intersecting with the central axis of the electrode assembly 22 to melt the second current collecting portion 232 and the end cover 24 to weld and connect the second current collecting portion 232 to the end cover 24 to form the first welded portion 25, and the first welded portion 25 does not run through the end cover 24 along the axial direction of the electrode assembly 22.

In Step S1054, the end cover 24 is moved in a direction close to the electrode assembly 22 until the current collecting member 23 switches from the second state to the first state.

The step S1051, step S1052, step S1053 and step S1054 can be performed in sequence, or the step S1052 can be performed first, then the step S1051 is performed, and then the step S1053 and the step S1054 are performed in sequence.

With the battery cell 20 manufactured by the manufacturing method of this embodiment, it is ensured that during assembly of the battery cell 20, by pulling up the second current collecting portion 232, the current collecting member 23 is welded to the end cover 24 in the second state, so as to prevent the laser from being projected onto the electrode assembly 22 during welding and damaging the electrode assembly 22, and it is also ensured that in the assembled battery cell 20, the second current collecting portion 232 of the current collecting member 23 does not occupy additional space in the case 21 along the axial direction X of the electrode assembly 22, thereby increasing the energy density of the battery cell 20.

According to some embodiments of the present application, after performing step S106, the method for manufacturing the battery cell 20 may further include step S107.

In step S107, the end cover 24 is welded and connected to the open-end face of the case 21 to form the second welded portion 26.

Step S107 may be implemented in the following manners, for example: in one possible manner, the laser is emitted along the axial direction X of the electrode assembly 22 and penetrates the end cover 24 to be projected onto the case 21, so that part of the end cover 24 and part of the case 21 are melted to form the second welded portion 26; in another possible manner, the laser is emitted along the direction Y perpendicular to the central axis of the electrode assembly 22 to melt the end cover 24 and the case 21 to form the second welded portion 26.

In the battery cell 20 manufactured using the manufacturing method of this embodiment, the end cover 24 and the case 21 are reliably connected by welding, which facilitates improving the sealing of the case 21 by the end cover 24, and the case 21 can also serve as an electrode lead-out pole.

It should be noted that, for the related structures of the battery cell 20 manufactured by the manufacturing methods provided by various embodiments mentioned above, reference may be made to the battery cell 20 provided by various embodiments mentioned above, and details will not be described here again.

Finally, it should be noted that the above embodiments are merely intended for illustrating rather than limiting the technical solutions of the present application. Although the present application has been described in detail with reference to the various embodiments above, those of ordinary skill in the art should understand that the technical solutions specified in the various embodiments above may still be modified, or some or all of the technical features therein may be equivalently substituted; and such modifications or substitutions do not make the essence of the corresponding technical solutions depart from the scope of the technical solutions of the various embodiments of the present application and shall fall within the scope of the claims and the specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery cell, comprising:
a case having an opening;
an electrode assembly accommodated in the case, the electrode assembly having tabs;
an end cover covering the opening; and
a current collecting member accommodated in the case and connected to the tabs, the current collecting member being welded and connected to the end cover to form a first welded portion, the first welded portion not running through the end cover along an axial direction of the electrode assembly.

2. The battery cell according to claim 1, wherein the first welded portion is configured to be formed by emitting laser in a direction intersecting with a central axis of the electrode assembly to melt the current collecting member and the end cover.

3. The battery cell according to claim 2, wherein the current collecting member comprises:
a first current collecting portion electrically connected to the tabs; and
a second current collecting portion located on an outer side of the first current collecting portion and connected to the first current collecting portion, the second current collecting portion being welded and connected to the end cover to form the first welded portion.

4. The battery cell according to claim 3, wherein the first current collecting portion has a flat-plate shaped structure, and the second current collecting portion protrudes from the first current collecting portion in a direction facing away from the electrode assembly along the axial direction of the electrode assembly.

5. The battery cell according to claim 4, wherein a first abutting surface is formed on the end cover, the first abutting surface is opposite an inner side face of the case, and the second current collecting portion abuts against and is welded and connected to the first abutting surface to form the first welded portion.

6. The battery cell according to claim 4 or 5, wherein a minimum distance between the first welded portion and the electrode assembly is a first distance h0 along the axial direction of the electrode assembly, and a penetration depth a of the first welded portion and the first distance h0 satisfy the condition: a/h0≤0.5.

7. The battery cell according to claim 3, wherein the first current collecting portion and the second current collecting portion both have a flat-plate shaped structure, so that the current collecting member has a flat-plate shaped structure.

8. The battery cell according to claim 7, wherein the case has an open-end face surrounding the opening, and the end cover comprises a connecting portion and a main body portion connected to each other, wherein the connecting portion is connected to the open-end face, the connecting portion surrounds an outer edge of the main body portion, the main body portion comprises a protrusion toward the electrode assembly, and the protrusion is welded and connected to the second current collecting portion to form the first welded portion.

9. The battery cell according to claim 7 or 8, wherein the current collecting member is provided with a partition hole, the partition hole separates the current collecting member into the first current collecting portion and the second current collecting portion, and the partition hole is configured to enable the current collecting member to have a first state and a second state, wherein in the first state, the current collecting member has a flat-plate shaped structure, and when the current collecting member is in the second state, the second current collecting portion protrudes from the first current collecting portion in a direction facing away from the electrode assembly.

10. The battery cell according to claim 9, wherein the partition hole is configured such that the second current collecting portion is an integral piece and the second current collecting portion has an annular structure.

11. The battery cell according to claim 10, wherein multiple partition holes are formed on the current collecting member, and the multiple partition holes are arranged at an interval around the central axis of the electrode assembly.

12. The battery cell according to claim 11, wherein the partition holes comprise a first through hole, a second through hole and a third through hole that are sequentially in communication, wherein:
the first through hole and the third through hole are both arc-shaped, centers of the arc-shaped first through hole and third through hole are both located on the central axis of the electrode assembly, and the third through hole is located on a side of the first through hole away from the central axis of the electrode assembly; and
the second through hole extends in a direction perpendicular to the central axis of the electrode assembly.

13. The battery cell according to claim 9, wherein multiple partition holes are formed on the current collecting member, the multiple partition holes are arranged at an interval around the central axis of the electrode assembly, and one end of each of the partition holes is close to the central axis of the electrode assembly and the other end extends to an outer side face of the second current collecting portion.

14. The battery cell according to claim 13, wherein the partition hole comprises a first open hole and a second open hole in communication with each other, wherein:
the first open hole is located on a side of the second open hole away from the central axis of the electrode assembly;
the first open hole extends to the outer side face of the second current collecting portion in a direction perpendicular to the central axis of the electrode assembly; and
the second open hole is arc-shaped, and a center of the arc-shaped second open hole is located on the central axis of the electrode assembly.

15. The battery cell according to claim 14, wherein the partition hole further comprises a third open hole and a fourth open hole that are in communication with the second open hole, and the third open hole and the fourth open hole are both located on a side of the second open hole close to the central axis of the electrode assembly and extend in the direction perpendicular to the central axis of the electrode assembly.

16. The battery cell according to any one of claims 1 to 15, wherein the case has an open-end face surrounding the opening, and the end cover is welded and connected to the open-end face to form a second welded portion.

17. The battery cell according to claim 16, wherein the second welded portion is configured to be formed by emitting laser in a direction perpendicular to the central axis of the electrode assembly to melt the end cover and the case.

18. The battery cell according to claim 17, wherein along the axial direction of the electrode assembly, a minimum distance between the second welded portion and the electrode assembly is a second distance h1, and a penetration depth b of the second welded portion formed on the end cover and the second distance h1 satisfy the condition: b/h1≤0.5.

19. The battery cell according to any one of claims 16 to 18, wherein the first welded portion is located between the second welded portion and the electrode assembly along the axial direction of the electrode assembly.

20. The battery cell according to any one of claims 16 to 19, wherein the end cover comprises a main body portion and a connecting portion surrounding an outer side of the main body portion, the connecting portion is welded and connected to the open-end face to form the second welded portion, a second abutting surface is formed on the main body portion, and the second abutting surface abuts against an inner side face of the case.

21. The battery cell according to claim 20, wherein the main body portion is in interference fit with a cavity in the case.

22. The battery cell according to any one of claims 1 to 21, wherein the tabs are electrically connected to the case through the current collecting member and the end cover in sequence.

23. A battery comprising the battery cell of any one of claims 1 to 22.

24. An electrical apparatus comprising the battery of claim 23, the battery being used for providing electric energy.

25. A method for manufacturing a battery cell, comprising:
providing a case having an opening;
providing an electrode assembly having tabs;
providing an end cover;
providing a current collecting member;
electrical connection: connecting the current collecting member to the tabs; emitting laser to melt the current collecting member and the end cover to weld and connect the current collecting member to the end cover to form a first welded portion, the first welded portion not running through the end cover along the axial direction of the electrode assembly; and
accommodating the electrode assembly and the current collecting member in the case, and covering the opening with the end cover.

26. The method for manufacturing according to claim 25, wherein:
the current collecting member comprises a first current collecting portion and a second current collecting portion, and the first current collecting portion and the second current collecting portion both have a flat-plate shaped structure, so that the current collecting member has a flat-plate shaped structure;
the current collecting member is provided with a partition hole, the partition hole separates the current collecting member into the first current collecting portion and the second current collecting portion, and the partition hole is configured to enable the current collecting member to have a first state and a second state, wherein in the first state, the current collecting member has a flat-plate shaped structure, and when the current collecting member is in the second state, the second current collecting portion protrudes from the first current collecting portion in a direction facing away from the electrode assembly; and
the step of electrical connection comprises:
connecting the first current collecting portion to the tabs;
pulling the second current collecting portion of the current collecting member toward a side facing away from the electrode assembly, so that the current collecting member switches from the first state to the second state;
emitting laser in a direction intersecting with a central axis of the electrode assembly to melt the second current collecting portion and the end cover to weld and connect the second current collecting portion to the end cover to form the first welded portion, the first welded portion not running through the end cover along the axial direction of the electrode assembly; and
moving the end cover in a direction towards the electrode assembly until the current collecting member switches from the second state to the first state.

27. The method for manufacturing according to claim 25 or 26, wherein after covering the opening with the end cover, the method for manufacturing further comprises:
welding and connecting the end cover to an open-end face of the case to form a second welded portion.
